# EUROPEAN PATENT APPLICATION

(11) **EP 4 726 906 A1**
(43) Date of publication of application: **15.04.2026**
(21) Application number: 25206301.1
(22) Date of filing: 02.10.2025
(51) Int. Cl.: H01M 50/526, H01M 50/517, H01M 50/503, H01M 50/588

(54) **INTERCONNECTION STRUCTURE BETWEEN BATTERY STACKS AND PROTECTOR**

(30) Priority: 08.10.2024 JP 2024176321
(71) Applicant: Yazaki Corporation, Tokyo 108-0075 (JP)
(72) Inventor: Kataoka, Masayuki, Makinohara-shi, Shizuoka, 421-0407 (JP); Kosho, Kozo, Makinohara-shi, Shizuoka, 421-0407 (JP); Ishida, Junya, Makinohara-shi, Shizuoka, 421-0407 (JP)
(74) Representative: Grünecker Patent- und Rechtsanwälte PartG mbB

(57) **Abstract**

An interconnection structure between stacks (1) includes a first terminal (T1) electrically connectable to the connection terminal (CT) of the first battery stack (BS1), a second terminal (T2) electrically connectable to the connection terminal (CT) of the second battery stack (BS2), a protector (P) formed in a hollow shape, and an electric wire (W) having one end side connected to the first terminal (T1) and another end side connected to the second terminal (T2), the electric wire (W) being inserted into the protector (P). The protector (P) includes a hinge portion (H1, H2) bendable in a prescribed direction, and is switchable between a first state for connecting the connection terminals (CT) to each other and a second state in which the protector (P) is bent in the prescribed direction using the hinge portion (H1, H2) from the first state.

## Description

### TECHNICAL FIELD

The present invention relates to an interconnection structure between stacks and a protector.

### BACKGROUND ART

An interconnection structure between stacks has been proposed in the related art, in which battery stacks each including a plurality of stacked battery cells are electrically connected to each other (for example, see Patent Literatures 1 and 2). In the interconnection structure between stacks described in Patent Literature 1, connection terminals of the battery stacks are adjacent to each other. For this reason, the connection terminals of the battery stacks are electrically connected to each other by a busbar. On the other hand, in the interconnection structure between stacks described in Patent Literature 2, connection terminals of the battery stacks are provided in separated positions instead of being adjacent to each other. In such a case, the connection terminals of the battery stacks are electrically connected to each other by a flexible electric wire. The electric wire is provided with, at each of two ends thereof, a terminal fitting to be connected to a corresponding one of the connection terminals.

### CITATION LIST

### PATENT LITERATURE

Patent Literature 1: JP2018-181780A
Patent Literature 2: JP2020-120939A

### SUMMARY OF INVENTION

However, since the interconnection structure between stacks described in Patent Literature 2 uses a flexible electric wire, a position of the electric wire may be not stable after the electric wire is connected to the connection terminal of the first battery stack until the electric wire is connected to the connection terminal of the second battery stack. For this reason, when the electric wire is bent in an unexpected direction, the terminal fitting may collide with another member and cause damage or deformation, and may cause a short circuit.

The present invention is made to solve such a problem in the related art, and an object of the present invention is to provide an interconnection structure between stacks and a protector that can reduce a probability of damage or short circuit of a terminal fitting when connection terminals of battery stacks are not adjacent to each other.

An interconnection structure between stacks for electrically connecting connection terminals to each other in a state in which a second battery stack is provided on a specific direction side relative to a first battery stack in a battery pack including the first and second battery stacks in which battery cells are stacked and the connection terminals are provided on the specific direction side, the interconnection structure between stacks includes a first terminal electrically connectable to the connection terminal of the first battery stack, a second terminal electrically connectable to the connection terminal of the second battery stack, a protector formed in a hollow shape, and an electric wire having one end side connected to the first terminal and another end side connected to the second terminal, the electric wire being inserted into the protector. The protector includes a hinge portion bendable in a prescribed direction, and is switchable between a first state for connecting the connection terminals to each other and a second state in which the protector is bent in the prescribed direction using the hinge portion from the first state.

A hollow protector for accommodating therein an electric wire connected to both a first terminal and a second terminal, the first terminal being electrically connectable to a connection terminal of a first battery stack and the second terminal being electrically connectable to a connection terminal of a second battery stack, battery cells being stacked and the connection terminals being provided on a specific direction side in the first and second battery stacks, the protector includes a hinge portion bendable in a prescribed direction. The protector is switchable between a first state for connecting the connection terminals and a second state in which the protector is bent in the prescribed direction by the hinge portion from the first state.

According to the present invention, it is possible to provide an interconnection structure between stacks and a protector that can reduce a probability of damage or short circuit of a terminal fitting when connection terminals of battery stacks are not adjacent to each other.

### BRIEF DESCRIPTION OF DRAWINGS

FIG. 1 is a perspective view illustrating an interconnection structure between stacks according to an embodiment;
FIG. 2 is an exploded perspective view of a part of a configuration illustrated in FIG. 1;
FIGS. 3A to 3C illustrate a configuration of a first hinge portion, in which FIG. 3A illustrates a state before bending, FIG. 3B illustrates a state after bending, and FIG. 3C is an enlarged view of the first hinge portion;
FIGS. 4A and 4B illustrate a configuration of a second hinge portion, in which FIG. 4A illustrates a state after bending, and FIG. 4B is an enlarged view of the second hinge portion;
FIG. 5 is a perspective view illustrating a first step of a method for electrically connecting battery stacks; and
FIG. 6 is a top view illustrating a second step of the method for electrically connecting the battery stacks.

### DESCRIPTION OF EMBODIMENTS

Hereinafter, the present invention will be described with reference to a preferred embodiment. The present invention is not limited to the embodiment to be described below, and can be appropriately changed without departing from the gist of the present invention. In the embodiment to be described below, there may be parts in which illustration and description of a part of a configuration are omitted, and it is needless to say that a publicly known or well-known technique is appropriately applied to details of an omitted technique within a range in which no contradiction with contents to be described below would occur.

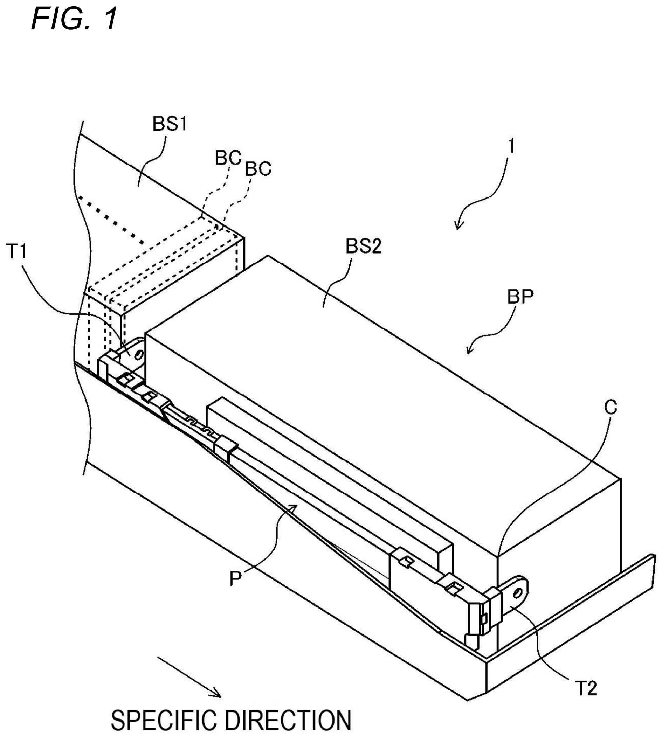

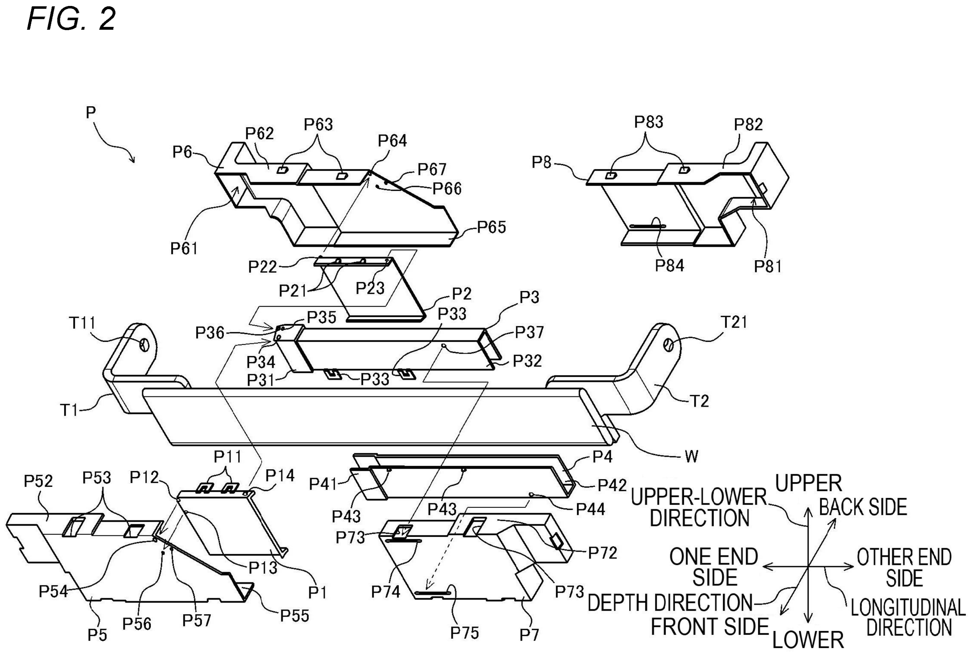

FIG. 1 is a perspective view illustrating an interconnection structure between stacks according to an embodiment, and FIG. 2 is an exploded perspective view of a part of a configuration illustrated in FIG. 1. An interconnection structure between stacks 1 illustrated in FIG. 1 includes a first battery stack BS1, a second battery stack BS2, a first terminal T1, a second terminal T2, a protector P, and an electric wire W (see FIG. 2). The interconnection structure between stacks 1 electrically connects the first and second battery stacks BS1, BS2 in a battery pack BP including the first battery stack BS1 and the second battery stack BS2.

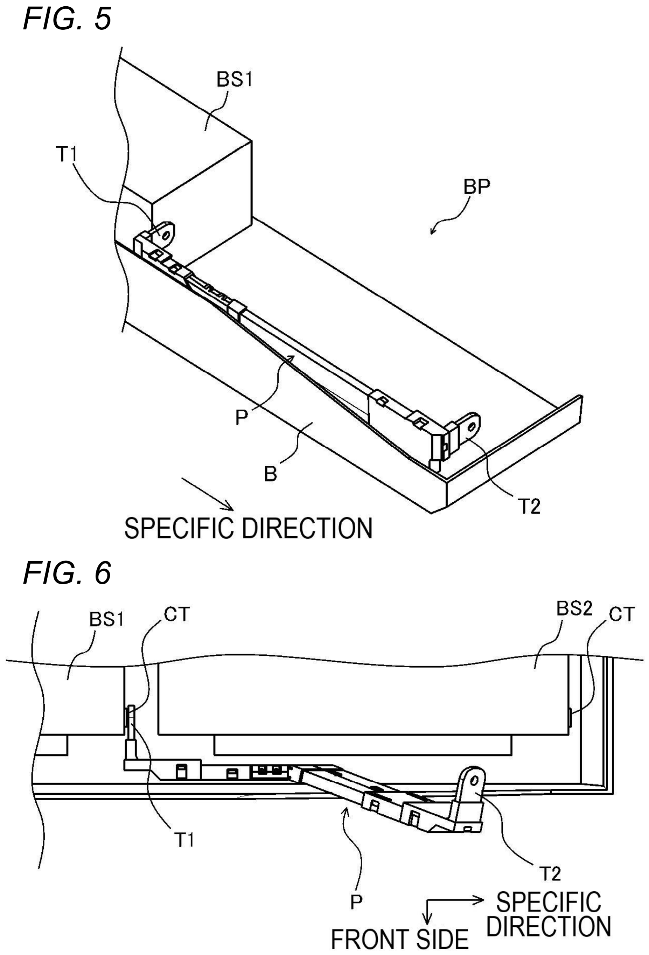

The first and second battery stacks BS1, BS2 are formed by stacked battery cells BC. The first and second battery stacks BS1, BS2 each include a connection terminal (see a reference sign CT in FIG. 6) on a specific direction side. The second battery stack BS2 is provided on the specific direction side relative to the first battery stack BS1. Therefore, the first and second battery stacks BS1, BS2 include the connection terminals CT in the same direction, and the connection terminals CT are not adjacent to each other. The connection terminal CT may not be provided on an end surface in a specific direction as long as the connection terminal CT is provided on the specific direction side of each of the first and second battery stacks BS1, BS2. For this reason, for example, the first battery stack BS1 may have the connection terminal CT on the end surface, and the second battery stack BS2 may be provided with the connection terminal CT on another surface in a vicinity of the end surface. Both the connection terminals CT may be provided on other surfaces of the first and second battery stacks BS1, BS2 in a vicinity of the end surfaces.

As illustrated in FIG. 2, each of the first and second terminals T1, T2 is a terminal fitting made of a metal plate member. The first terminal T1 is electrically connectable to the connection terminal CT of the first battery stack BS1, and the second terminal T2 is electrically connectable to the connection terminal CT of the second battery stack BS2. The first and second terminals T1, T2 are formed with, in top ends thereof, openings T11, T21 for connection to the connection terminals CT. The first and second terminals T1, T2 are electrically connected to the connection terminals CT through the openings T11, T21 by bolting or the like. The first terminal T1 has a base side connected to one end of the electric wire W, and the second terminal T2 has a base side connected to the other end of the electric wire W.

The protector P is formed in a hollow shape and accommodates a part of the first and second terminals T1, T2 and the electric wire W therein to protect them. In the present embodiment, the electric wire W is assumed to be a flexible flat cable, but is not particularly limited thereto, and may be implemented by a plurality of round electric wires or the like.

The protector P includes a first component P1 and a second component P2. The first component P1 and the second component P2 are members that sandwich the electric wire W in a depth direction orthogonal to a longitudinal direction and an upper-lower direction. The first component P1 is a member having a U-shaped cross-section that is open on a back side in the depth direction, and the second component P2 is a member having a U-shaped cross-section that is open on a front side in the depth direction.

The first component P1 includes a to-be-engaged portion P11 extending to the back side in a position of a U-shaped end portion. The to-be-engaged portion P11 is formed of a U-shaped plate. On the other hand, the second component P2 includes an engagement portion P21 having an inclined structure in a vicinity of a U-shaped end portion. In the first and second components P1, P2, the engagement portion P21 and the to-be-engaged portion P11 are engaged in a state of accommodating the electric wire W. Accordingly, the first and second components P1, P2 cover and protect the electric wire W.

The protector P further includes a third component P3 and a fourth component P4. The third component P3 is a member having a U-shaped cross-section that is open on a lower side, and the fourth component P4 is a member having a U-shaped cross-section that is open on an upper side. The third and fourth components P3, P4 include enlarged portions P31, P41 having a larger inner cross-sectional area on one end side and reduced portions P32, P42 having a smaller inner cross-sectional area than the enlarged portions P31, P41 on the other end side.

The third component P3 includes a to-be-engaged portion P33 formed of a U-shaped plate extending downward from a lower end of the reduced portion P32. On the other hand, the fourth component P4 includes an engagement portion P43 having an inclined structure in a vicinity of an upper end of the reduced portion P42 having a U-shaped cross-section. In the third and fourth components P3, P4, the engagement portion P43 and the to-be-engaged portion P33 are engaged in a state in which the other end sides of the first and second components P1, P2 are accommodated by the enlarged portions P31, P41 and a vicinity of a central portion of the electric wire W is accommodated by the reduced portions P32, P42. Accordingly, the third and fourth components P3, P4 cover and protect a part of the first and second components P1, P2 and a part of the electric wire W.

The protector P includes fifth to eighth components P5 to P8. The fifth component P5 is a member having a U-shaped cross-section that is open on the back side in the depth direction, and the sixth component P6 is a member having a U-shaped cross-section that is open on the front side in the depth direction. The sixth component P6 is formed with, on the one end side thereof, a terminal opening P61 through which the top end of the first terminal T1 is inserted.

The fifth component P5 includes a to-be-engaged portion P53 implemented by an opening in a plate member P52 constituting two end portions of the U shape. On the other hand, the sixth component P6 includes an engagement portion P63 having an inclined structure on a plate member P62 constituting two end portions of the U shape. In the fifth and sixth components P5, P6, the engagement portion P63 and the to-be-engaged portion P53 are engaged in a state in which the electric wire W and the first terminal T1 are accommodated on the one end side and the first and second components P1, P2 are accommodated on the other end side. Accordingly, the fifth and sixth components P5, P6 cover and protect the base side of the first terminal T1, the one end side of the electric wire W, and the one end sides of the first and second components P1, P2.

The seventh component P7 is a member having a U-shaped cross-section that is open on the back side in the depth direction, and the eighth component P8 is a member having a U-shaped cross-section that is open on the front side in the depth direction. The eighth component P8 is formed with, on the other end side thereof, a terminal opening P81 through which the top end of the second terminal T2 is inserted.

The seventh component P7 includes a to-be-engaged portion P73 implemented by an opening in a plate member P72 constituting two end portions of the U shape. On the other hand, the eighth component P8 includes an engagement portion P83 having an inclined structure on a plate member P82 constituting two end portions of the U shape. In the seventh and eighth components P7, P8, the engagement portion P83 and the to-be-engaged portion P73 are engaged in a state in which the electric wire W and the second terminal T2 are accommodated on the other end side and the reduced portions P32, P42 of the third and fourth components P3, P4 are accommodated on the one end side. Accordingly, the seventh and eighth components P7, P8 cover and protect the base side of the second terminal T2, the other end side of the electric wire W, and the other end sides of the reduced portions P32, P42.

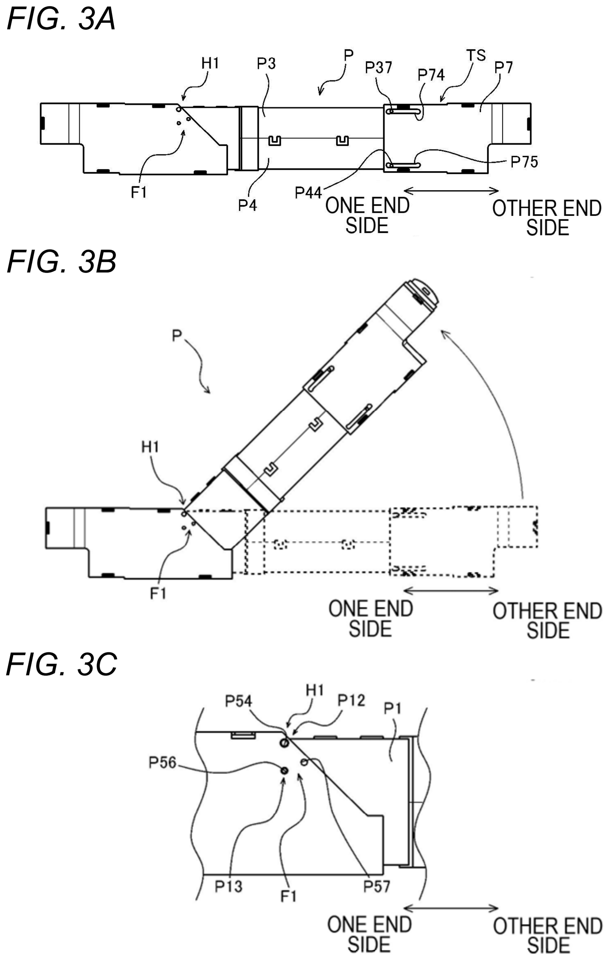

In the present embodiment, the protector P includes first and second hinge portions (hinge portions) that are bendable in a prescribed direction. FIGS. 3A to 3C illustrate a configuration of the first hinge portion, in which FIG. 3A illustrates a state before bending, FIG. 3B illustrates a state after bending, and FIG. 3C is an enlarged view of the first hinge portion.

As illustrated in FIGS. 3A and 3B, with the first hinge portion H1, the one end side of the protector P is in a fixed state and the other end side is pivotably bendable in the upper-lower direction (an example of the prescribed direction). That is, the protector P is switchable between a first state illustrated in FIG. 3A and a second state illustrated in FIG. 3B. The first state is a state for electrically connecting the connection terminals CT to each other. The second state is a state in which the protector P is bent in the upper-lower direction using the first hinge portion H1 from the first state.

To implement such a switch, the protector P has following configurations. That is, as illustrated in FIGS. 2 and 3C, the first and second components P1, P2 include projecting portions P12, P22 at corners of upper ends on the one end side. Further, the fifth and sixth components P5, P6 have openings P54, P64 into which the projecting portions P12, P22 are fitted.

Here, the projecting portions P12, P22 and the openings P54, P64 are arranged coaxially in the depth direction. Further, the fifth and sixth components P5, P6 include restriction walls P55, P65 on a lower side, and is open on an upper side of the other end side. Accordingly, the other components P1 to P4, P7, and P8 are pivotably bendable upward about the projecting portions P12, P22 relative to the fifth and sixth components P5, P6 (see FIG. 3B).

Here, the first, second, fifth, and sixth components P1, P2, P5, and P6 have a first fixing structure (fixing structure) F1. As illustrated in FIG. 2, the first fixing structure F1 includes small projections P13 provided on the first component P1, and small holes P56, P57, P66, and P67 provided on the fifth and sixth components P5, P6. As illustrated in FIG. 3C, the small projection P13 provided on the first component P1 is provided in a position slightly below the projecting portion P12 and protrudes to the front side similarly to the projecting portion P12. The first small hole P56 provided in the fifth component P5 is provided in a position slightly below the opening P54. As illustrated in FIG. 3C, the small projection P13 and the first small hole P56 are fitted in the first state in which there is no bending. As illustrated in FIGS. 2 and 3C, the second small hole P57 is provided in a rotational position of the first small hole P56 about the opening P54. The small projection P13 and the second small hole P57 are fitted in the second state. Therefore, in the first fixing structure F1, the small projection P13 is fitted into the first small hole P56 or the second small hole P57, so that a position thereof can be fixed in both the first state and the second state.

Although not illustrated, the second component P2 is also provided with a small projection similar to the small projection P13. The sixth component P6 is also provided with the small holes P66, P67. These are provided in positions symmetrical to the small projection P13 and the small holes P56, P57 in the depth direction. For this reason, the small projection of the fourth component P4 and the small holes P66, P67 of the sixth component P6 function similarly, and the positions thereof can be fixed in both the first state and the second state.

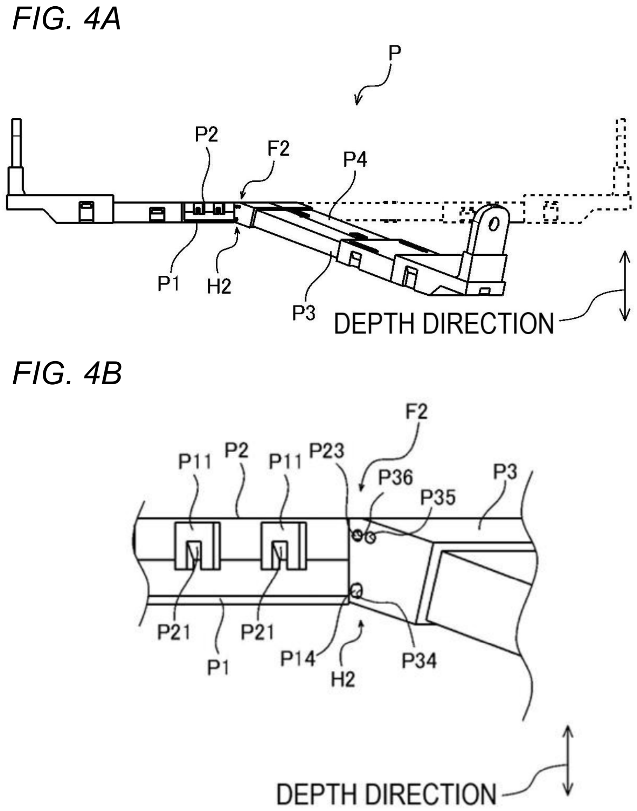

FIGS. 4A and 4B illustrate a configuration of the second hinge portion, in which FIG. 4A illustrates a state after bending, and FIG. 4B is an enlarged view of the second hinge portion. As illustrated in FIG. 4A, with the second hinge portion H2, the one end side of the protector P is in a fixed state and the other end side is pivotably bendable in the depth direction (an example of the prescribed direction). That is, the protector P is switchable between the first state indicated by a broken line and the second state indicated by a solid line in FIG. 4A. The first state is a state for electrically connecting the connection terminals CT to each other. The second state is a state in which the protector P is bent in the depth direction using the second hinge portion H2 from the first state.

To implement such a switch, the protector P has following configurations. That is, as illustrated in FIGS. 2 and 4B, the first component P1 includes a projecting portion P14 protruding upward on an upper face on the back side of the other end. The third component P3 has, in the enlarged portion P31, an opening P34 into which the projecting portion P14 is fitted. Although not illustrated, the first component P1 includes a projecting portion protruding downward on a lower face on the back side of the other end. Further, the fourth component P4 has, in the enlarged portion P31, an opening into which the projecting portion is fitted. The two projecting portions P14 of the first component P1 and the openings P34 of the third and fourth components P3, P4 are coaxial. Accordingly, the third and fourth components P3, P4 are pivotably bendable in the depth direction about the projecting portion P14 relative to the first and second components P1, P2 (see FIG. 4A).

Here, the first to fourth components P1 to P4 have a second fixing structure (fixing structure) F2. As illustrated in FIG. 2, the second fixing structure F2 includes a small projection P23 provided on the second component P2 and small holes P35, P36 provided in the third and fourth components P3, P4. The small projection P23 provided on the second component P2 protrudes upward on an upper face on the back side of the other end. The first small hole P35 provided in the third component P3 is provided in a position slightly backward of the opening P34. The small projection P23 and the first small hole P35 are fitted in the first state in which there is no bending. As illustrated in FIGS. 2 and 4B, the second small hole P36 is provided in a rotational position of the first small hole P35 about the opening P34. The small projection P23 and the second small hole P36 are fitted in the second state. Therefore, in the second fixing structure F2, the small projection P23 is fitted into the first small hole P35 or the second small hole P36, so that a position thereof can be fixed in both the first state and the second state.

Although not illustrated, the second component P2 is also provided with, on a lower face side thereof, a small projection similar to the small projection P23. The fourth component P4 is also provided with small holes similar to the small holes P35, P36. These are provided in positions symmetrical to the small projection P23 and the small holes P35, P36 in the upper-lower direction. For this reason, the small projection on the lower face of the second component P2 and the small holes of the fourth component P4 function similarly, and the positions thereof can be fixed in both the first state and the second state.

In addition, as illustrated in FIG. 3A, the third, fourth, seventh, and eighth components P3, P4, P7, and P8 of the protector P according to the present embodiment have a stretchable structure TS. As illustrated in FIGS. 2 and 3A, the stretchable structure TS includes projecting portions P37, P44 and slide grooves P74, P75, and P84.

Specifically, the third component P3 includes the projecting portion P37 on a side face in a vicinity of an upper end on the other end side. Similarly, the fourth component P4 includes the projecting portion P44 on a side face in a vicinity of a lower end on the other end side. The seventh component P7 has the first slide groove P74 into which the projecting portion P37 of the third component P3 is fitted. The seventh component P7 further has the second slide groove P75 into which the projecting portion P44 of the fourth component P4 is fitted. The first slide groove P74 extends in the longitudinal direction in a side face in a vicinity of an upper end on the one end side of the seventh component P7. The second slide groove P75 extends in the longitudinal direction in a side face in a vicinity of a lower end on the one end side of the seventh component P7. For this reason, the projecting portions P37, P44 can move in the slide grooves P74, P75, and the seventh and eighth components P7, P8 are stretchable relative to the third and fourth components P3, P4 by lengths of the slide grooves P74, P75.

Although not illustrated, the third and fourth components P3, P4 include projecting portions similar to the projecting portions P37, P44. Further, although not partially illustrated, the eighth component P8 also has the slide grooves P84 similar to the slide grooves P74, P75. The projecting portions and the slide grooves P84 are formed in positions symmetrical to the projecting portions P37, P44 of the third and fourth components P3, P4 and the slide grooves P74, P75 of the seventh component P7 in the depth direction. Therefore, the seventh and eighth components P7, P8 also function similarly, and are stretchable relative to the third and fourth components P3, P4.

Since the protector P is bendable and stretchable in the above description, the electric wire W is pulled outside the bending or during stretching. For this reason, to prevent the electric wire W from being broken by such tension, the electric wire W is preferably folded to have a bent portion in the protector P.

Next, a method for electrically connecting the battery stacks BS1, BS2 according to the present embodiment will be described. FIG. 5 is a perspective view illustrating a first step of the method for electrically connecting the battery stacks BS1, BS2, and FIG. 6 is a top view illustrating a second step of the method for electrically connecting the battery stacks BS1, BS2.

As illustrated in FIG. 5, first, the first battery stack BS1 is mounted on a housing B that constitutes the battery pack BP. Next, the protector P accommodating the first terminal T1, the second terminal T2, and the electric wire W is prepared. The first terminal T1 and the connection terminal CT of the first battery stack BS1 are connected by bolting or the like.

Next, as illustrated in FIG. 6, the protector P is bent. Specifically, the protector P is bent upward by the first hinge portion H1 to be in the second state relative to the first hinge portion H1. Further, the protector P is preferably bent to the front side by the second hinge portion H2 to be in the second state relative to the second hinge portion H2. Then, the second battery stack BS2 is mounted.

Here, the bending direction is limited by the hinge portions H1, H2, and thus the protector P is prevented from being bent in an unexpected direction. Further, since the protector P has the first and second fixing structures F1, F2, the protector P can be fixed in the second state. Therefore, a probability that the protector P unintentionally returns to the first state and the second terminal T2 collides with the connection terminal CT and is damaged or the like is also reduced.

Thereafter, the protector P is brought into the first state relative to both the first hinge portion H1 and the second hinge portion H2. At this time, it is preferable to extend the protector P using the stretchable structure TS so that a corner portion C (see FIG. 1) of the second battery stack BS2 does not collide with the second terminal T2 due to a rotation radius of the protector P.

Next, when the protector P is set to the first state, the second terminal T2 and the connection terminal CT of the second battery stack BS2 are connected by bolting or the like. At this time, since the protector P has the stretchable structure TS, a manufacturing tolerance between the battery stacks BS1, BS2 can be absorbed.

In this manner, the interconnection structure between stacks 1 and the protector P according to the present embodiment include the hinge portions H1, H2 that are bendable in a prescribed direction, and are switchable between the first state and the second state. The first state is a state for connecting the connection terminals CT to each other, and the second state is a state in which the protector P is bent in the prescribed direction using the hinge portions H1, H2 from the first state. Since the protector P has such a structure, the bending direction is limited to the prescribed direction by the hinge portions H1, H2 after the first terminal T1 is attached to the connection terminal CT of the first battery stack BS1. Therefore, the protector P is prevented from being bent in an unexpected direction. Accordingly, it is possible to reduce a probability that the protector P is bent in the unexpected direction and the second terminal T2 comes into contact with another member and is damaged or the like or causes a short circuit. Therefore, it is possible to provide the interconnection structure between stacks 1 that can reduce a probability of damage or short circuit of terminal fittings when the connection terminals CT of the battery stacks BS1, BS2 are not adjacent to each other.

The protector P has the fixing structures F1, F2 that can fix the position of the protector P in the second state. For this reason, for example, the protector P reduces the probability that the protector P unintentionally returns to the first state after entering the second state and the second terminal T2 collides with the connection terminal CT of the second battery stack BS2 and is damaged or the like. Therefore, it is possible to provide the interconnection structure between stacks 1 that can further reduce the probability of damage or the like of the terminal fittings.

The protector P further has the stretchable structure TS. For this reason, for example, the protector P can cope with the manufacturing tolerance or the like of the battery stacks BS1, BS2 by stretching as long as the electric wire W is folded and stored therein.

Although the present invention is described above based on the embodiment, the present invention is not limited to the embodiment described above, a modification may be made without departing from the gist of the present invention, and a publicly known or well-known technique may be combined.

For example, although the protector P includes the two hinge portions H1, H2 in the above embodiment, the present invention is not limited thereto, and only one of the hinge portions H1, H2 may be provided. Further, although the protector P has the fixing structures F1, F2, but is not limited thereto, and may not particularly have a fixing structure. The fixing structures F1, F2 may not fix the position of the protector P in the first state as long as the position of the protector P can be fixed at least in the second state.

Further, the protector P has the stretchable structure TS, and may not have the stretchable structure TS as long as the first and second terminals T1, T2 can absorb a tolerance with another part, such as having certain flexibility.

### [Explanation of Reference Signs]

1 interconnection structure between stacks
BC stacked battery cell
BP battery pack
BS1 first battery stack
BS2 second battery stack
CT connection terminal
F1 first fixing structure (fixing structure)
F2 second fixing structure (fixing structure)
H1 first hinge portion (hinge portion)
H2 second hinge portion (hinge portion)
P protector
T1 first terminal
T2 second terminal
TS
W electric wire

## Claims

1. An interconnection structure between stacks (1) for electrically connecting connection terminals (CT) to each other in a state in which a second battery stack (BS2) is provided on a specific direction side relative to a first battery stack (BS1) in a battery pack including the first and second battery stacks (BS1, BS2) in which battery cells (BC) are stacked and the connection terminals (CT) are provided on the specific direction side, the interconnection structure between stacks (1) comprising:
a first terminal (T1) electrically connectable to the connection terminal (CT) of the first battery stack (BS1);
a second terminal (T2) electrically connectable to the connection terminal (CT) of the second battery stack (BS2);
a protector (P) formed in a hollow shape; and
an electric wire (W) having one end side connected to the first terminal (T1) and another end side connected to the second terminal (T2), the electric wire (W) being inserted into the protector (P),
wherein the protector (P) includes a hinge portion (H1, H2) bendable in a prescribed direction, and is switchable between a first state for connecting the connection terminals (CT) to each other and a second state in which the protector (P) is bent in the prescribed direction using the hinge portion (H1, H2) from the first state.

2. The interconnection structure between stacks (1) according to claim 1, wherein
the protector (P) has a fixing structure (F1, F2) allowing position fixing in the second state.

3. The interconnection structure between stacks (1) according to claim 1, wherein
the protector (P) has a stretchable structure (TS).

4. A hollow protector (P) for accommodating therein an electric wire (W) connected to both a first terminal (T1) and a second terminal (T2), the first terminal (T1) being electrically connectable to a connection terminal (CT) of a first battery stack (BS1) and the second terminal (T2) being electrically connectable to a connection terminal (CT) of a second battery stack (BS2), battery cells (BC) being stacked and the connection terminals (CT) being provided on a specific direction side in the first and second battery stacks (BS1, BS2), the protector (P) comprising:
a hinge portion (H1, H2) bendable in a prescribed direction,
wherein the protector (P) is switchable between a first state for connecting the connection terminals (CT) and a second state in which the protector (P) is bent in the prescribed direction by the hinge portion (H1, H2) from the first state.
